## Europäisches Patentamt
## European Patent Office
## Office européen des brevets

(19)

(11) Veröffentlichungsnummer: **0 029 442**
**B1**

(12)

# EUROPÄISCHE PATENTSCHRIFT

(45) Veröffentlichungstag der Patentschrift:
**14.11.84**

(21) Anmeldenummer: **80901037.4**

(22) Anmeldetag: **09.06.80**

(86) Internationale Anmeldenummer:
**PCT/DE 80/00088**

(87) Internationale Veröffentlichungsnummer:
**WO 80/02712 (11.12.80 Gazette 80/28)**

(51) Int. Cl.³: **E 06 B 9/24, F 24 J 3/02**

(54) **VORRICHTUNG ZUR AUTOMATISCHEN STEUERUNG DES SONNENLICHTEINFALLS.**

(30) Priorität: **08.06.79 DE 2923233**
**25.07.79 DE 2930103**
**20.10.79 DE 2942497**

(43) Veröffentlichungstag der Anmeldung:
**03.06.81 Patentblatt 81/22**

(45) Bekanntmachung des Hinweises auf die Patenterteilung:
**14.11.84 Patentblatt 84/46**

(84) Benannte Vertragsstaaten:
**AT CH DE FR GB LI NL SE**

(73) Patentinhaber: **KÖSTER PATENTE GMBH,**
**Karl-Bieber-Höhe 13, D-6000 Frankfurt am Main (DE)**

(72) Erfinder: **KÖSTER, Helmut, Karl-Bieber-Höhe 13,**
**D-6000 Frankfurt am Main (DE)**

(74) Vertreter: **Schickedanz, Willi, Langener Strasse 70,**
**D-6050 Offenbach/Main (DE)**

(56) Entgegenhaltungen:
**DE - A - 2 615 379**
**DE - A - 2 711 442**
**DE - C - 955 820**
**FR - A - 1 287 760**
**FR - A - 1 521 488**
**GB - A - 1 135 045**
**US - A - 1 937 342**
**US - A - 2 509 033**
**US - A - 3 014 252**
**US - A - 3 384 519**
**US - A - 3 986 490**
**US - A - 4 148 299**

## Beschreibung

### Technisches Gebiet der Erfindung

Die Erfindung betrifft eine Vorrichtung zur automatischen Steuerung des Lichteinfalls, mit lichtdurchlässigen Wandteilen und lichtundurchlässigen Elementen, die parallel übereinander und im Abstand zueinander angeordnet sind, wobei sich die lichtundurchlässigen Elemente zwischen den lichtdurchlässigen Wandteilen befinden und mindestens auf einem dem einstrahlenden Licht zugewandten Bereich verspiegelt sind und wobei zwei lichtundurchlässige Elemente einen Einstrahlungs- und einen Ausstrahlungsquerschnitt bilden.

### Stand der Technik

Es sind bereits lichtundurchlässige Elemente bekannt, deren Ober- und Unterseiten verspiegelt sind (US-A-1 937 342; FR-A-1 521 488). Hierbei handelt es sich jedoch um flächige Elemente, die keine Konzentrationswirkung ausüben. Lichtundurchlässige Elemente mit parabelförmigen Wandflächen sind indessen ebenfalls bekannt (FR-A-1 287 760). Hierbei kann jedoch das Licht nicht zwischen der Oberseite eines Elements und der Unterseite eines benachbarten Elements eintreten.

Es ist weiterhin eine Vorrichtung bekannt, die lichtundurchlässige und reflektierende Elemente mit gekrümmten Oberflächen aufweist (US-A-2 146 816). Durch die Krümmungen der Elemente können einige einfallende Strahlenbündel an bestimmten Stellen konzentriert werden. Die lichtundurchlässige Elemente sind jedoch nicht zwischen lichtdurchlässigen Wandteilen vorgesehen, sondern sie werden durch Leiterbänder miteinander verbunden. Ausserdem weisen die Ober- und Unterseiten der lichtundurchlässigen Elemente die gleichen Krümmungen auf, so dass zwei Punkte zweier übereinander angeordneter Elemente in senkrechter Richtung stets, d.h. unabhängig von der waagrechten Lage, die gleiche Entfernung voneinander haben. Hierdurch ist es nicht möglich, das einfallende Licht präzise zu steuern. Beispielsweise werden im Sommer die einfallenden Strahlen mit einmaliger Reflexion in den Himmel zurückgestrahlt, wodurch keine ausreichende Streuung der Strahlung gewährleistet ist und Blendungen, z.B. des Flugverkehrs, unvermeidlich sind.

### Aufgabe

Der Erfindung liegt deshalb die Aufgabe zugrunde, eine Vorrichtung zu schaffen, bei der Licht zwischen der Oberseite eines ersten Elements und der Unterseite eines zweiten Elements eintreten und durch diese Vorrichtung konzentriert werden kann, wobei die Elemente zwischen lichtdurchlässige Wänden angeordnet sind und eine weitgehend blendfreie Reflexion des einstrahlenden sowie abstrahlenden Lichts ermöglichen.

### Lösung

Die vorstehende Aufgabe wird erfindungsgemäss dadurch gelöst, dass die Oberseite eines ersten lichtundurchlässigen Elements mit der Unterseite eines zweiten lichtundurchlässigen Elements einen Konzentrationsquerschnitt bilden, der sich zwischen dem Einstrahlungs- und dem Ausstrahlungsquerschnitt befindet, und dass die Kontur der Oberseite eines lichtundurchlässigen Elements von der Kontur der Unterseite dieses Elements verschieden ist, so dass eine vom Lichteinfallswinkel weitgehend unabhängige Energieeinstrahlungsdichte erzielt wird.

### Vorteilhafte Wirkungen der Erfindung

Der mit der Erfindung erzielte Vorteil besteht insbesondere in der Konzentration der Sonnenstrahlung. Ausserdem kann der Energiedurchgang in der jahreszeitlichen Übergangsperiode bzw. das Abschattungsverhalten genau bestimmt werden. Ferner dienen die reflektierenden Elemente als Wärmereflektoren gegenüber der Innenraumseite und der Aussenraumseite. Weiterhin können die Reflexionsverluste beim Strahlendurchgang zur Innenseite durch Mehrfachreflexion zurückgewonnen werden. Weiterhin erfolgt durch die Reflektoren eine Trennung des Luftzwischenraums zwischen den lichtdurchlässigen Wandteilen in je eine der Aussenseite zugewandten Kammer und je eine der Innenraumseite zugewandten Kammer, wodurch eine Konvektion zwischen den lichtdurchlässigen Wandteilen vermeidbar und ein verbesserter Wärmedurchgangswiderstand erzielbar ist. Schliesslich ist es auch noch möglich, im Sommer das Sonnenlicht zur Vermeidung unerwünschter Blendwirkungen der Umgebung durch Mehrfachreflexion diffus abzustrahlen.

### Beschreibung der Zeichnungen

Es zeigen:

Fig. 1 eine Vorrichtung zur Steuerung der Sonneneinstrahlung mit Spiegelprofilen, die zur Lichtkonzentration dienen;

Fig. 2 eine Vorrichtung zur Steuerung der Sonneneinstrahlung mit Spiegelprofilen und darin vorgesehenen Absorberrohren;

Fig. 3 eine auf einem schrägen Dach angeordnete Vorrichtung zur Steuerung der Sonneneinstrahlung;

Fig. 4 den Konzentrationsfaktor in Abhängigkeit vom Sonneneinstrahlungswinkel zu verschiedenen Jahreszeiten an einem bestimmten geographischen Ort;

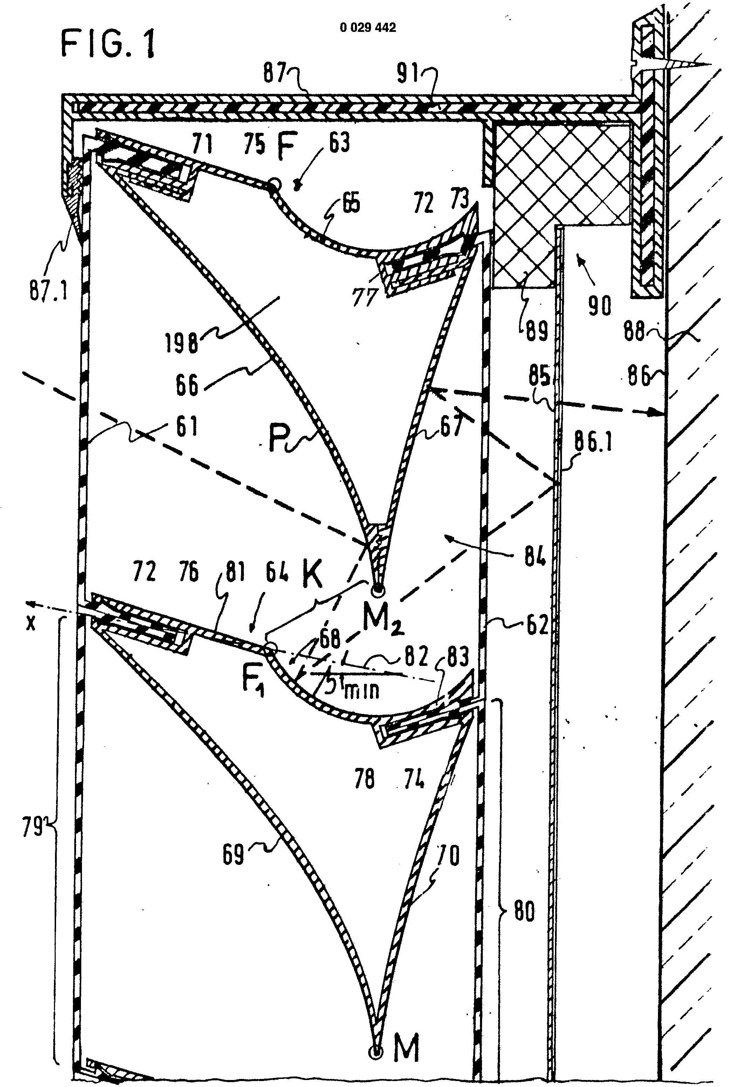

In der Fig. 1 ist eine Vorrichtung zur automatischen Steuerung des direkten Sonnenlichteinfalls dargestellt, welche zwei lichtdurchlässige Spiegelprofile 63, 64, die zur Konzentration der Sonneneinstrahlung dienen, aufweist. Diese Spiegelprofile 63, 64 bestehen aus drei Bereichen 65, 66, 67 bzw. 68, 69, 70. Zwischen den Spiegelprofilen 63, 64 und den Wandteilen 61, 62 sind Klemmverbindungen vorgesehen, die dadurch hergestellt werden, dass die Wandteile besonders ausgebildete Stege 71, 72, 73, 74 aufweisen, über welche jeweils eine entsprechende Aussparung 75, 76, 77, 78 gestülpt wird. Da die Stege 71, 72, 73, 74 ineinandergreifen, bildet sich somit eine Einsteckverbindung.

Der Wandteil 61 ist der direkten Sonneneinstrahlung ausgesetzt, während sich der Wandteil 62 in der Verschattungszone befindet. Die Anordnung von zwei Spiegelprofilen über- bzw. untereinander bildet einen Öffnungsquerschnitt 79 und einen Konzentrationsquerschnitt K sowie einen Ausstrahlungsquerschnitt 80. Der trogförmige Einstrahlungstrichter wird aus dem verspiegelten Bereich 66 und dem verspiegelten Teilbereich 81 gebildet. Der verspiegelte Bereich 66 ist parabelförmig ausgebildet und hat seinen Brennpunkt $F_1$ im Endpunkt des gegenüberliegenden Teilbereichs 81 innerhalb des Konzentrationsquerschnitts K. Die Achse 82 der durch den Bereich 66 angedeuteten Parabel P ist in einem Winkel $\beta$ geneigt, der dem niedrigsten einzufangenden Sonneneinstrahlungswinkel $\beta_{min}$ entspricht. Die gegenüberliegende Seitenwand 81 ist eben ausgebildet, sie kann jedoch auch parabolisch gewölbt oder auf andere Weise geformt sein. An den ebenen Teilbereich 81 schliesst ein kreisförmiger Bereich 83 an, dessen Kreismittelpunkt M im Endpunkt der parabelförmigen Fläche 66 im Konzentrationsquerschnitt K liegt. Durch diesen Bereich 83 wird das Licht in einen Ausstrahlungstrichter 84 gegeben. Die auf den Bereich 67 fallende Strahlung wird in den Raum hinter dem Wandteil 62 gestreut, so dass eventuell dort vorhandene Kollektoren mit einer gleichmässig verteilten Energie beaufschlagt werden. Ein Wärmestau im Bereich der konzentrierten Energieeinstrahlung wird somit vermieden. Der Bereich 67 stellt einen Reflektor für einen an dem Wandteil 62 oder an der Absorberfläche 86 reflektierten Strahlungsanteil dar. Der Wandteil 62, der beispielsweise aus Glas besteht, reflektiert grundsätzlich einen Teil des ihm zugeführten Lichts. Da der Bereich 67 und der Wandteil 62 einen keilförmigen Raum einschliessen, wird der von dem Wandteil 62 auf den Bereich 67 reflektierte Lichtanteil mehrfach zwischen dem Bereich 67 und dem Wandteil 62 hin- und herreflektiert, so dass die ganze vom Konzentrator auf den Ausstrahlungstrichter 84 gegebene Strahlung den Wandteil 62 ohne Reflexionsverluste durchdringt. Dies gestattet es, die Absorptionsfläche 86 mit einem kleineren Absorptionskoeffizienten zu versehen, da die Rückstrahlung von der Fläche 86 auf den Ausstrahlungstrichter 84 wieder auf die Absorptionsfläche 86 zurückgestrahlt wird. Da der Emissionskoeffizient gleich dem Absorptionskoeffizient ist, kann mit Hilfe eines derartigen Ausstrahlungstrichters 84 die Emission einer Kollektorfläche durch Verminderung der Absorptionsfähigkeit bei gleichem oder höherem Gesamtabsorptionskoeffizienten reduziert werden. Die Ausbildung des Ausstrahlungstrichters 84 ermöglicht auch eine Mehrfachverglasung auf der Innenraumseite, ohne dass ein Energieeinstrahlungsverlust infolge Reflexion auftritt. Weiterhin besteht die Möglichkeit, auf der Innenraumseite an einer Folie 85 einen Wärmespiegel 86.1 anzuordnen.

Derartige Wärmespiegel, die zum Beispiel auch als Sonnenschutz dienen können, werden durch an sich bekannte metallische Bedampfungsvorgänge (vergl. DE-A-2 238 355) hergestellt und verfügen im allgemeinen auch über ein Reflexionsvermögen für sichtbare Strahlen. Durch die Mehrfachreflexionen im Ausstrahlungstrichter 84 wird der reflektierte Strahlungsanteil jedoch wieder zurückgeführt, so dass trotz der reflektierenden Wirkung ein Einstrahlungsverlust vermieden wird. Der Ausstrahlungstrichter 84 ermöglicht somit einen hohen Wirkungsgrad bei der Energiegewinnung und bei der Wärmespeicherung, weshalb sich die in der Fig. 1 gezeigte Vorrichtung besonders als Fassadenelement für eine lichtabsorbierende und wärmespeichernde Wand eignet.

Die Vorrichtung der Fig. 1 kann auch in einen Rahmen 87 eingefügt sein, der auf einer Aussenwand 88 befestigt ist. Mit Hilfe eines geschäumten Profils 89 wird die Vorrichtung mit dem Rahmen 87 verklemmt. In einem Falz 90 wird die lichtdurchlässige Folie 85 eingeklebt. Bei dem Rahmen 87 handelt es sich um ein extrudiertes PVC-Profil, in das zur Aussteifung ein Aluminiumprofil 91 eingeschoben ist. Zur Abdichtung des Rahmens 87 ist eine besondere Dichtlippe 87.1 vorgesehen, die auf dem Wandteil 61 aufliegt.

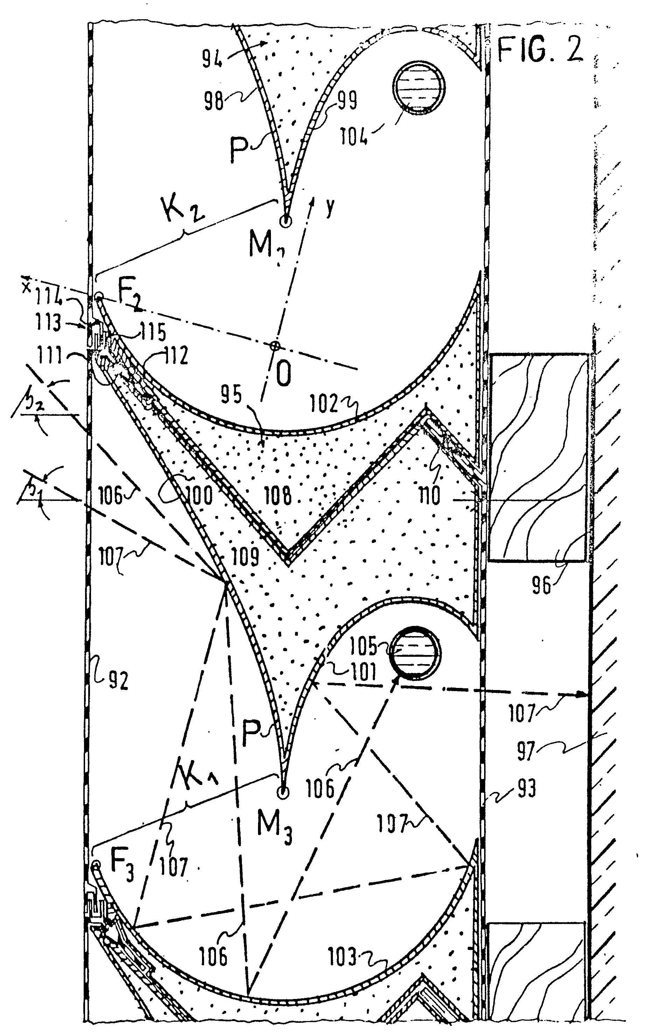

In der Fig. 2 ist eine weitere Vorrichtung zur automatischen Steuerung des Sonnenlichteinfalls dargestellt, die zwei lichtdurchlässige Wandteile 92, 93 enthält, zwischen denen die Spiegelprofile 94, 95 angeordnet sind. Die Vorrichtung ist über eine Unterkonstruktion 96 nach Art einer Verlattung an einer Aussenwand 97 befestigt, so dass besondere Rahmenteile weitgehend entbehrlich sind. Hierdurch kann eine Anpassung der Vorrichtung an die gegebenen Einbaumasse vor Ort erfolgen und eine beliebige Flächenausdehnung vorgenommen werden. Die Spiegelprofile 94, 95 weisen auf ihren einstrahlungsseitigen Oberflächen ein parabelförmiges Profilteil 98, 100 sowie ein zum Innenraum orientiertes Spiegelteil 99, 101 auf. Gegenüber den Teilen 98, 99; 100, 101 befindet sich jeweils ein kreisbogenförmiges Profilteil 102, 103. Im optischen Zentrum der Profilteile 99, 101 ist jeweils ein Energieempfänger 104, 105 angeordnet, der als Absorberrohr ausgebildet ist, welches von einem Wärmeträgermittel durchströmt wird. Diese Energieempfänger 104, 105 erhalten aufgrund der besonderen Ausgestaltung der Elemente 94, 95 eine vom jahreszeitabhängigen Sonnenhöhenwinkel weitgehend unabhängige Energieeinstrahlungsdichte von konstanter Grösse, während die Einstrahlungsdichte auf dem Wandteil 93 mit zunehmendem Sonnenhöhenwinkel geringer wird. Dadurch ist der gewünschte Selbststeuerungseffekt bezüglich der Funktion «Heizen» oder «Kühlen» gewährleistet. Infolge der Anordnung der Energieempfänger 104, 105 werden die Cosinusverluste so genutzt, dass sich die Solarbeheizung des Gebäudes bzw. der Mauer automatisch bei grossem Einstrahlungswinkel ausschaltet.

Besonders vorteilhaft ist der Umstand, dass die Energieempfänger 104, 105 zum einen auf der zum Innenraum gelegenen Seite der Spiegelprofile 94, 95 angeordnet sind und zum andern von oben durch die Krümmung der parabelförmigen Profilteile 99, 101 überdacht werden. Hierdurch staut sich die Wärme auf der Innenraumseite und kann nicht zur Einstrahlungsseite abfliessen.

Die Brennpunkte $F_2$ bzw. $F_3$ der parabelförmigen Profilteile, 98, 100 befinden sich unmittelbar an dem lichtdurchlässigen Wandteil 92 und bilden den Ausgangspunkt für eine kreisförmige Leitspiegelfläche, die durch die Profilteile 102, 103 gebildet wird. Die Leitspiegelfläche wird hierbei durch den Mittelpunkt $M_2$, $M_3$ im Endpunkt der parabelförmigen Fläche 98, 100 sowie durch den Konzentrationsquerschnittsbereich $K_1$, $K_2$ definiert. Die auf der Schattenseite gelegenen und sich um die Absorberrohre 104, 105 wölbenden Profilteile 99, 101 werden empirisch so ermittelt, dass die gewünschte Strahlungsverteilung in bezug auf die unterschiedlichen Sonnenhöhenwinkel stattfindet. Der Kurvenverlauf der so ermittelten Profilteile 99, 101 ist parabelförmig. In der Fig. 2 ist der Strahlenverlauf unter dem Winkel $\beta_1$ und dem Winkel $\beta_2$ dargestellt, der den optischen Selbststeuerungseffekt verdeutlicht. Der unter dem Winkel $\beta_2$ einfallende Strahl 106 wird hierbei auf das Absorberrohr 105 gelenkt, während der unter dem Winkel $\beta_1$ einfallende Strahl 107 nach viermaliger Reflexion durch den Wandteil 93 gestrahlt wird. Die lichtundurchlässigen Elemente 94, 95 sind aus zwei Teilen 108, 109 zusammengesetzt, die zweckmässigerweise durch Schäumen mit Polyurethan oder Polyisocyanorat hergestellt werden.

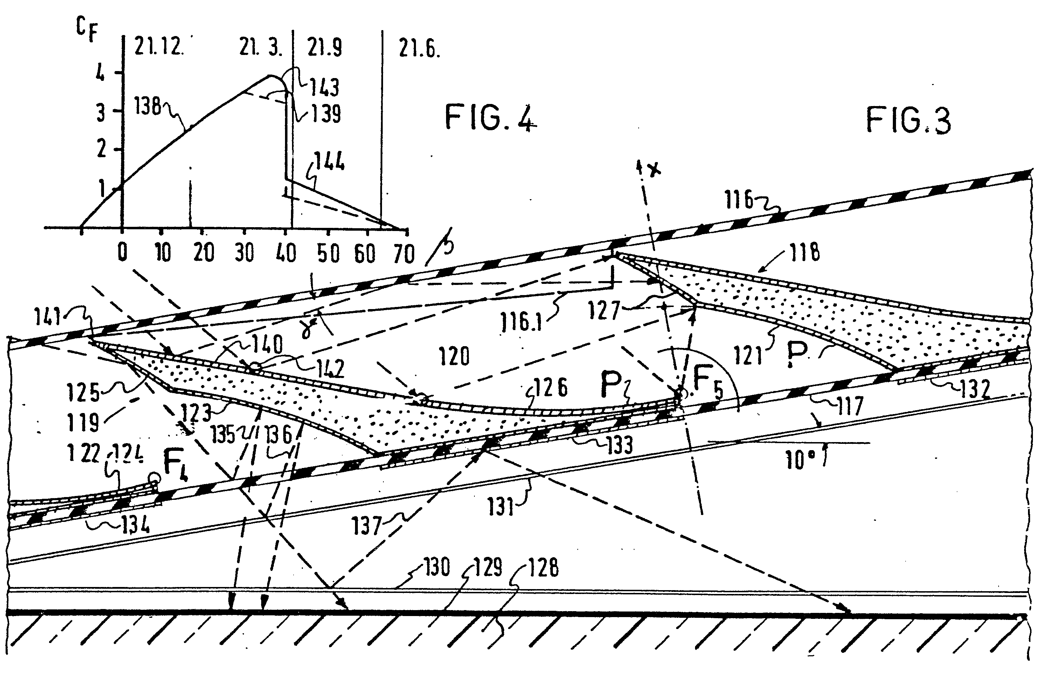

Die Montage der Vorrichtung erfolgt auf der Unterkonstruktion 96, auf der die Wandteile 92 aufgeschraubt und justiert werden. Es werden dann die Absorberrohre 104, 105 verlegt. In einem weiteren Arbeitsgang werden die Teile 108, 109 auf einen Zapfen 110 des Wandteils 93 aufgesteckt und mit dem Wandteil 92 verkleidet. Das äussere Wandteil 92 wird von unten nach oben zusammengesteckt, wobei jeweils der untere Bereich 111 in eine sägezahnartige Nut 112 eingesteckt wird. Der obere Bereich 113 wird über eine Steckverbindung mit dem unteren Bereich des Wandteils 92 verbunden, indem zwei U-förmige Anschlüsse 114, 115 ineinander gesteckt werden. Dieser Zusammenschluss erfolgt in der Weise, dass der untere U-Anschluss 115 eine Rinne für das von oben ablaufende Schwitzwasser bildet. Die äusseren Kanten der U-Anschlüsse 114, 115 sind stellenweise in Querrichtung mit Kerben versehen, um ein Ablaufen des Schwitzwassers nach aussen zu ermöglichen. In der Fig. 3 ist eine weitere Vorrichtung zur Steuerung des Lichteinfalls dargestellt, die vorzugsweise auf schrägen Dächern von Wohn- und Gewächshäusern und anderen Bauwerken angeordnet oder als Abdeckung verwendet wird. Zweck dieser Vorrichtung ist es u.a., eine Konzentration der Sonneneinstrahlung vorzunehmen, wie es beispielsweise in der DE-A-2 823 252 näher ausgeführt ist. Die Vorrichtung weist zwei lichtdurchlässige Wandteile 116, 117 auf, zwischen denen mehrere lichtundurchlässige und verspiegelte Profile 118, 119 angeordnet sind. Durch zwei Profile 118, 119 wird je ein Einstrahlungstrichter 120, 122 gebildet, an den sich ein Ausstrahlungstrichter 121, 123 anschliesst. Der Einstrahlungstrichter 120, 122 wird hierbei durch zwei einander gegenüberliegende Parabelstücke 124, 125 bzw. 126, 127 gebildet, von denen das eine Parabelstück 125, 127 wesentlich kleiner ist als das andere Parabelstück 124, 126.

Die gesamte Vorrichtung befindet sich über einer Decke 128, die eine Absorber-Oberfläche 129 aufweist. Über der Absorber-Oberfläche 129 sind eine erste Folie 130 und eine zweite Folie 131 vorgesehen, die als Wärmeschutzmassnahmen dienen. Parallel zu zweiten Folie 131 ist der Wandteil 117 angeordnet, der an bestimmten Stellen 132, 133, 134 der Unterseite reflektierend ausgebildet ist. Der Ausstrahlungstrichter 121, 123 ist parabelförmig ausgebildet und erfüllt die Bedingung, dass jeder von der strahlungsdurchlässigen Fläche 117 reflektierter Strahl 135 mindestens einmal auf die strahlungsdurchlässige Fläche 117 zurückreflektiert wird. Desgleichen werden die Lichtstrahlen 136, 137, die an den Folien 130, 131 reflektiert werden, von dem Ausstrahlungstrichter 121, 123 oder der reflektierenden Stelle 133 gespiegelt. Bei dem Absorber 129 handelt es sich um einen Kollektorspeicher einer Decke 128, über den die Vorrichtung mit Abstand angeordnet ist. Der Ausstrahlungstrichter 121, 123 erfüllt die vorstehend genannte Bedingung dann, wenn der Wandteil 117 senkrecht zur Parabelachse angeordnet ist, wobei der Brennpunkt $F_5$ im Endpunkt der Spiegelfläche liegt, wo auch der Konzentrationsquerschnitt zu finden ist. Im Winter, wenn der Einstrahlungswinkel gering ist, wird durch die in der Fig. 3 gezeigte Vorrichtung eine Belichtung bewirkt, während im Sommer eine Verschattung erfolgt.

In der Fig. 4 ist dieser Zusammenhang noch einmal für den 50. Breitengrad um 12 Uhr dargestellt. Man erkennt aus der Kurve 138, dass der Konzentrationsfaktor $C_F$ von dem Einstrahlungswinkel und damit von den Jahreszeiten, die mit 21.12., 21.3., 21.9., 21.6. angegeben sind, abhängt. Das Abknicken des Kurvenverlaufs im Bereich 139 wird durch die kontinuierlich zunehmende Strahlung bewirkt, die von dem Bereich 140 zwischen den Punkten 141, 142 zurückgestrahlt wird. Mit Hilfe des Bereichs 140 wird somit ein besonders grosser Konzentrationsfaktor während der kalten Jahreszeit und bei niedrigem Einstrahlungswinkel erzielt. Die im Bereich 140 zurückreflektierte Strahlung fällt in einem sehr flachen Winkel auf den äusseren Wandteil 116. Dieser Winkel ist in der Fig. 3 mit $\gamma$ bezeichnet. Entsprechend diesem flachen Strahlungswinkel ist der an dem Wandteil 116 reflektierte Strahlungsanteil sehr hoch, so dass auch eine Rückstrahlung in den Konzentrationstrichter erfolgt. Der tatsächliche Konzentrationsfaktor nimmt somit den Verlauf an, wie er durch die Kurventeile 143, 144 dargestellt ist.

Der äussere Wandteil 116 kann prismenförmig ausgebildet sein, wodurch sich die Spiegelung der Lichtrückstrahlung des Seitenwandteils 140 über einen grösseren Winkelbereich erstreckt. Die Prismenausbildung erfolgt dabei konisch, wie es durch die gestrichelte Linie 116.1 angedeutet ist.

Im Wandteil 117 können Solarzellen eingegossen werden. In diesem Fall ist die parabelförmige Ausbildung des Ausstrahlungstrichters 121, 123 besonders vorteilhaft, weil zwischen den einzelnen Solarzellen-Chips in der Regel Verspiegelungen angeordnet sind. Die auf die Chips fallende Strahlung wird von diesen Verspiegelungen auf den Ausstrahlungstrichter 121, 123 zurückreflektiert und von diesem auf die Chips zurückgestrahlt.

Es sei an dieser Stelle noch darauf hingewiesen, dass die vorstehend beschriebenen Spiegelprofile nur beispielhaft angegeben sind. Andere Spiegelprofile, wie sie beispielsweise in der deutschen Patentanmeldung P 2 942 497.3 beschrieben sind, können ebenfalls zur Anwendung gelangen.

**Patentansprüche**

1. Vorrichtung zur automatischen Steuerung des Lichteinfalls, mit lichtdurchlässigen Wandteilen (61, 62; 92, 93; 116, 117) und lichtundurchlässigen Elementen (63, 64; 108, 109; 118, 119), die parallel übereinander und im Abstand zueinander angeordnet sind, wobei sich die lichtundurchlässigen Elemente (63, 64; 108, 109; 118, 119) zwischen den lichtdurchlässigen Wandteilen (61, 62; 92, 93; 116, 117) befinden und mindestens auf einem dem einstrahlenden Licht zugewandten Bereich verspiegelt sind und wobei zwei lichtundurchlässige Elemente (63, 64; 108, 109; 118, 119) einen Einstrahlungs- (79) und einen Ausstrahlungsquerschnitt (80) bilden, dadurch gekennzeichnet, dass die Oberseite eines ersten lichtundurchlässigen Elements (z.B. 81, 83) mit der Unterseite eines zweiten lichtundurchlässigen Elements (z.B. 66, 67) einen Konzentrationsquerschnitt (K) bilden, der sich zwischen dem Einstrahlungs- und dem Ausstrahlungsquerschnitt befindet, und dass die Kontur der Oberseite eines lichtundurchlässigen Elements (63, 64; 108, 109; 118, 119) von der Kontur der Unterseite dieses Elements (63, 64; 108, 109; 118, 119) verschieden ist, so dass eine vom Lichteinfallswinkel weitgehend unabhängige Energieeinstrahlungsdichte erzielt wird.

2. Vorrichtung nach Anspruch 1, dadurch gekennzeichnet, dass das durch einen Einstrahlungsquerschnitt eintretende Licht innerhalb eines Aufnahmewinkels in einen Konzentrationsquerschnitt (K) einstrahlt, und dass sich dieser Aufnahmewinkel gegenüber kleineren Elevationswinkeln $\beta$ der Sonne öffnet, wobei bei kleineren Elevationswinkeln $\beta$ höhere und bei grösseren Elevationswinkeln $\beta$ verminderte Konzentrationsfaktoren oder eine Verschattung des Konzentrations- oder Ausstrahlungsquerschnitts erzielbar ist.

3. Vorrichtung nach Anspruch 1, dadurch gekennzeichnet, dass die Oberseite eines lichtundurchlässigen Elements (63, 64; 108, 109; 118, 119) mindestens ein Teilstück (65, 68; 102, 103) aufweist, wobei sich dieses Teilstück (65, 68; 102, 103) vom Konzentrationsquerschnitt (K) zum Ausstrahlungsquerschnitt (80, 93) erstreckt, dass dieses Teilstück (65, 68; 102, 103) ferner eine zylindermantelförmige Fläche mit einem Mittelpunkt (M) aufweist, der im Konzentrationsquerschnitt gelegen ist, und dass die Unterseite eines lichtundurchlässigen Elements (63, 64; 108, 109; 118, 119) aus mindestens einem Teilstück besteht, welches parabelförmig gewölbt ist, wobei der Brennpunkt der Parabel ($F_1$–$F_3$) im Konzentrationsquerschnitt gelegen ist, und dass der Endpunkt des parabelförmigen Teilstücks im Konzentrationsquerschnitt den Mittelpunkt (M) der zylindermantelförmigen Fläche der Oberseite eines benachbarten Elements bildet.

4. Vorrichtung nach den Ansprüchen 1 oder 2, dadurch gekennzeichnet, dass die Oberseite eines lichtundurchlässigen Elements (63, 64; 108, 109; 118, 119) aus zwei Teilstücken besteht, wobei das erste Teilstück (81, 75) ein Wandteil eines Konzentrationstrichters ist und sich vom Einstrahlungsquerschnitt (79) zum Konzentrationsquerschnitt (K) erstreckt, und wobei sich das zweite Teilstück (83, 65) vom Konzentrationsquerschnitt (K) bis zum Ausstrahlungsquerschnitt (80) erstreckt.

5. Vorrichtung nach Anspruch 1, dadurch gekennzeichnet, dass die Oberseite eines lichtdurchlässigen Elements (119) ein Teilstück (126) aufweist, wobei dieses Teilstück (126) parabelförmig ausgebildet ist und der Brennpunkt des Teilstücks (126) im Konzentrationsquerschnitt liegt, und dass die Unterseite eines lichtundurchlässigen Elements (119) zwei Teilstücke (123, 125) enthält, wobei sich das eine Teilstück (125) vom Einstrahlungsquerschnitt zum Konzentrationsquerschnitt erstreckt und das zweite Teilstück (123) vom Konzentrationsquerschnitt zum Ausstrahlungsquerschnitt führt.

6. Vorrichtung nach Anspruch 1, dadurch gekennzeichnet, dass die lichtdurchlässigen Wandteile (61, 62; 92, 93; 116, 117) prismenförmig ausgebildet sind.

7. Vorrichtung nach Anspruch 1, dadurch gekennzeichnet, dass innerhalb der lichtundurchlässigen Elemente (63, 64; 108, 109; 118, 119) mindestens ein Energiewandler vorgesehen ist, der die optische Energie in eine andere Energieform überführt.

8. Vorrichtung nach Anspruch 7, dadurch gekennzeichnet, dass der Energiewandler ein Absorberrohr oder dergleichen ist und im Bereich der Unterseite eines lichtundurchlässigen Elements (63, 64; 108, 109, 118, 119) sowie hinter dem Konzentrationsquerschnitt (K) auf der Innenseite im Bereich des Ausstrahlungsquerschnitts vorgesehen ist.

9. Vorrichtung nach Anspruch 1, dadurch gekennzeichnet, dass der Ausstrahlungsquerschnitt (80) grösser als der Konzentrationsquerschnitt ist.

10. Vorrichtung nach Anspruch 1, dadurch gekennzeichnet, dass sie als trennende und wärmeisolierende Wandung zwischen einem Innen- und einem Aussenraum vertikal oder mit Neigung angeordnet ist und dass eine Wandung in Rahmen eingebaut oder aus einzelnen Profilen aufgebaut und über eine Unterkonstruktion als vorgesetzte Fassade oder Dachelemente angebracht wird.

11. Vorrichtung nach Anspruch 1, dadurch gekennzeichnet, dass die lichtdurchlässigen Wandteile (62, 61; 92, 93; 116, 117) und die lichtundurchlässigen Elemente (63, 64; 108, 109; 118, 119) aus Kunststoff extrudiert und über Steck- und Schnappverbindungen zu einem wandartigen Gebilde zusammengefügt sind.

12. Verfahren zur Herstellung der lichtundurchlässigen Elemente gemäss Vorrichtung nach Anspruch 1, dadurch gekennzeichnet, dass in eine Negativform, deren inneren Abmessungen den äusseren Abmessungen der Elemente (63, 64) entspricht, ein Kunststoffschlauch gegeben wird und dass dieser Kunststoffschlauch ausgeschäumt wird, so dass sich die Elemente ergeben.

13. Verfahren nach Anspruch 12, dadurch gekennzeichnet, dass in die Negativform eine metallisierte Kunststoff-Folie gegeben wird, und dass diese Kunststoff-Folie ausgeschäumt wird, so dass sich die spiegelnden Elemente ergeben.

14. Verfahren zur Herstellung einer Vorrichtung nach Anspruch 1, dadurch gekennzeichnet, dass die lichtdurchlässigen Wandteile (61, 62; 92, 93; 116, 117) mit den lichtundurchlässigen Elementen (63, 64; 108, 109; 118, 119) mit Hilfe von Steck- und Schnappverbindungen miteinander verbunden werden.

15. Verfahren zur Herstellung einer Vorrichtung nach Anspruch 1, dadurch gekennzeichnet, dass die lichtdurchlässigen Wandteile (61, 62; 92, 93; 116, 117) mit den lichtundurchlässigen Elementen (63, 64; 108, 109; 118, 119) mittels Ultraschall verschweisst werden.

**Claims**

1. Apparatus for automatic control of incident light, with transparent wall elements (61, 62, 92, 93, 116, 117) and opaque elements (63, 64, 108, 109, 118, 119), which are arranged in parallel and spaced from one another, wherein the opaque elements (63, 64, 108, 109, 118, 119) are located between the transparent wall elements (61, 62, 92, 93, 116, 117) and have at least a reflecting area facing the irradiated light and wherein two opaque elements (63, 64, 108, 109, 118, 119) form an irradiation section (79) and an emission section (80), characterized in that the upper surface of a first opaque element (e.g. 81, 83) and the lower surface of a second opaque element (e.g. 66, 67) form a concentrating section (K) which is located between the irradiation and emission sections and that the contour of the upper surface of an opaque element (63, 64, 108, 109, 118, 119) differs from the contour of the lower surface of said element (63, 64, 108, 109, 118, 119) so that an energy irradiation density substantially independent of the light incidence angle is obtained.

2. Apparatus according to claim 1, characterized in that light entering through an irradiation section within an acceptance angle irradiates in a concentrating section (K) and that this reception angle opens with respect to smaller angles of elevation $\beta$ of the sun, whereby in the case of smaller angles of elevation $\beta$ higher concentration factors and in the case of larger angles of elevation $\beta$ smaller concentration factors are obtained, or there is a shading of the concentrating or emission sections.

3. Apparatus according to claim 1, characterized in that the upper surface of an opaque element (63, 64, 108, 109, 118, 119) has at least one partial area (65, 68, 102, 103), the latter extending from the concentrating section (K) to the emission section (80, 93), that this partial area (65, 68, 102, 103) also has a cylindrical casing-like surface with a centre (M) located in the concentrating section, and that the lower surface of an opaque element (63, 64, 108, 109, 118, 119) comprises at least one partial area having a parabolic curvature, the focus of the parabola ($F_1$–$F_3$) being located in the concentrating section and that the end point of the parabolic partial area forms in the concentrating section the centre (M) of the cylindrical casing-like surface of the upper surface of an adjacent element.

4. Apparatus according to claims 1 or 2, characterized in that the upper surface of an opaque element (63, 64, 108, 109, 118, 119) comprises two partial areas, the first partial area (81, 75) being a wall element of a concentration funnel and extending from the irradiation section (79) to the concentrating section (K), whilst the second partial area (83, 65) extends from the concentrating section (K) to the emission section (80).

5. Apparatus according to claim 1, characterized in that the upper surface of an opaque element (119) has a partial area (126) having a parabolic configuration and the focus of partial area (126) is located in the concentrating section and that the lower surface of an opaque element (119) contains two partial areas (123, 125), one partial area (125) extending from the irradiation section to the concentrating section and the second partial area (123) extending from the concentrating section to the emission section.

6. Apparatus according to claim 1, characterized in that the transparent wall elements (61, 62, 92, 93, 116, 117) are constructed in prismatic manner.

7. Apparatus according to claim 1, characterized in that at least one energy converter is provided within the opaque element (63, 64, 108, 109, 118, 119) which converts the optical energy to another energy form.

8. Apparatus according to claim 7, characterized in that the energy converter is an absorber tube or the like and is provided in the vicinity of the lower surface of an opaque element (63, 64, 108, 109, 118, 119), as well as behind the concentrating section (K) on the inside and in the vicinity of the emission section.

9. Apparatus according to claim 1, characterized in that the emission section (80) is larger than the concentrating section.

10. Apparatus according to claim 1, characterized in that a separating and thermally insulating wall is arranged vertically or at an inclination between an inner and an outer space and that a wall is fitted into the space or constructed from individual profiles and is fitted over a substructure as a front wall or roof element.

11. Apparatus according to claim 1, characterized in that the transparent wall elements (62, 61, 92, 93, 116, 117) and the opaque elements (63, 64, 108, 109, 118, 119) are extruded from plastics and are combined to form a wall-like structure by means of plug and snap connections.

12. Method for producing opaque elements for the apparatus according to claim 1, characterized in that a plastics hose is introduced into a female mould, whose internal dimensions correspond to the external dimensions of the elements (63, 64) and that said plastics hose is foamed in situ, so that the elements are obtained.

13. Method according to claim 12, characterized in that a metallized plastics foil is introduced into the female mould and that this plastics foil is foamed in situ, so that the reflecting elements are obtained.

14. Method for producing an apparatus according to claim 1, characterized in that the transparent wall elements (61, 62, 92, 93, 116, 117) are joined together with the opaque elements (63, 64, 108, 109, 118, 119) with the aid of plug and snap connections.

15. Method for producing an apparatus according to claim 1, characterized in that the transparent wall elements (61, 62, 92, 93, 116, 117) are ultrasonically welded to the opaque elements (63, 64, 108, 109, 118, 119).

**Revendications**

1. Installation pour la commande automatique du flux solaire incident, qui comprend des parties de paroi translucides (61, 62; 92, 93; 116, 117) et des éléments non translucides (63, 64; 108, 109; 118, 119) disposés parallèlement les uns au-dessus des autres et à une certaine distance les uns des autres, les éléments non translucides (63, 64; 108, 109; 118, 119) étant placés entre les parties de paroi translucides (61, 62; 92, 96; 116, 117) et rendus réflecteurs au moins sur une zone tournée du côté de la lumière incidente et deux éléments non translucides (63, 64; 108, 109; 118, 119) formant un secteur d'entrée (79) du rayonnement et un secteur de sortie (80) du rayonnement, caractérisée en ce que le côté supérieur d'un premier élément non translucide (p. ex. 81, 83) et le côté inférieur d'un deuxième élément non translucide (p. ex. 66, 67) forment un secteur de concentration (K) qui se trouve entre le secteur d'entrée du rayonnement et le secteur de sortie du rayonnement et en ce que le contour du côté supérieur d'un élément non translucide (63, 64; 108, 109; 118, 119) est différent du contour du côté inférieur de cet élément (63, 64; 108, 109; 118, 119), de sorte que l'on obtient une densité de rayonnement d'énergie qui est largement indépendante de l'angle d'incidence.

2. Installation selon la revendication 1, caractérisé en ce que la lumière qui pénètre par un secteur d'entrée du rayonnement arrive à l'intérieur d'un angle de réception dans un secteur de concentration (K) et en ce que cet angle de réception s'ouvre quand la hauteur angulaire β du soleil diminue, de sorte que pour des hauteurs angulaires plus petites on peut obtenir des coefficients de concentration plus élevés et que pour des hauteurs angulaires β plus grandes on peut obtenir des coefficients de concentration plus faibles ou une mise à l'ombre du secteur de concentration ou du secteur de sortie du rayonnement.

3. Installation selon la revendication 1, caractérisée en ce que le côté supérieur d'un élément non translucide (63, 64; 108, 109; 118, 119) comporte au moins une partie (65, 68; 102, 103), cette partie (65, 68; 102, 103) s'étendant du secteur de concentration (K) au secteur de sortie du rayonnement (80, 93), en ce que cette partie (65, 68; 102, 103) comporte une surface cylindrique dont le centre (M) se trouve dans le secteur de concentration et en ce que le côté inférieur d'un élément non translucide (63, 64; 108, 109; 118, 119) est constitué par au moins une partie incurvée en forme de parabole, le foyer de la parabole ($F_1$–$F_3$) se trouvant dans le secteur de concentration et en ce que le point où se termine la partie parabolique dans le secteur de concentration constitue le milieu (M) de la surface cylindrique du côté supérieur d'un élément voisin.

4. Installation selon l'une des revendication 1 ou 2, caractérisée en ce que le côté supérieur d'un élément non translucide (63, 64; 108, 109; 118, 119) est composé de deux parties, la première partie (81, 75) étant une partie de paroi d'un entonnoir de concentration et s'étendant du secteur (79) d'entrée du rayonnement au secteur de concentration (K) et la deuxième partie (83, 65) s'étendant depuis le secteur de concentration (K) jusqu'au secteur (80) de sortie du rayonnement.

5. Installation selon la revendication 1, caractérisée en ce que le bord supérieur d'un élément non translucide (119) comporte une partie (126), cette partie (126) ayant la forme d'une parabole et le foyer de la partie (126) se trouvant dans le secteur de concentration, et en ce que le côté inférieur d'un élément non translucide (119) contient deux parties (123, 125), l'une de ces parties (125) s'étendant du secteur d'entrée du rayonnement au secteur de concentration et la deuxième partie (123) s'étendant du secteur de concentration au secteur de sortie du rayonnement.

6. Installation selon la revendication 1, caractérisée en ce que les parties de paroi translucides (61, 62; 92, 93; 116, 117) ont une forme prismatique.

7. Installation selon la revendication 1, caractérisée en ce qu'à l'intérieur des éléments non translucides (63, 64; 108, 109; 118, 119) il y a au moins un transformateur d'énergie qui transforme l'énergie lumineuse en une autre forme d'énergie.

8. Installation selon la revendication 7, caractérisée en ce que le transformateur d'énergie est un tube d'absorption ou un appareil analogue et se trouve dans la zone du côté inférieur d'un élément non translucide (63, 64; 108, 109; 118, 119) de même qu'en arrière du secteur de concentration (K) sur le côté intérieur dans la zone du secteur de sortie du rayonnement.

9. Installation selon la revendication 1, caractérisée en ce que le secteur de sortie du rayonnement (80) est plus grand que le secteur de concentration.

10. Installation selon la revendication 1, caractérisée en ce qu'elle est placée, verticalement ou avec une certaine inclinaison, comme paroi de séparation et d'isolation thermique, entre l'espace intérieur et l'extérieur, et en ce qu'une paroi est montée dans un cadre ou formée de plusieurs profils et montée sur une construction sous-jacente comme façade ou comme éléments de toiture.

11. Installation selon la revendication 1, caractérisée en ce que les parties de paroi translucides (62, 61; 92, 93; 116, 117) et les éléments non translucides (63, 64; 108, 109; 118, 119) sont en matière plastique et réalisés par extrusion et assemblés au moyen de liaisons par insertion et serrage de manière à former une paroi.

12. Procédé pour la fabrication d'éléments non translucides pour l'installation selon la revendication 1, caractérisé en ce que, dans un moule négatif dont les dimensions intérieures correspondent aux dimensions extérieures des éléments (63, 64), on introduit une enveloppe en matière plastique et que cette enveloppe en matière plastique est transformée en mousse de manière à former les éléments.

13. Procédé selon la revendication 12, caractérisé en ce que l'on introduit dans le moule négatif une feuille de matière plastique métallisée et que cette feuille de matière plastique est transformée en mousse de manière à former les éléments réflecteurs.

14. Procédé de fabrication d'une installation selon la revendication 1, caractérisé en ce que les parties de paroi translucides (61, 62; 92, 93; 116, 117) sont reliées aux éléments non translucides (63, 64; 108, 109; 118, 119) par des dispositifs de liaison à insertion et à serrage.

15. Procédé de fabrication d'une installation selon la revendication 1, caractérisé en ce que les parties de paroi translucides (61, 62; 92, 93; 116, 117) sont soudées par ultrasons aux éléments non translucides (63, 64; 108, 109; 118, 119).

FIG. 1

FIG. 2

0 029 442

FIG. 4

FIG. 3

0 029 442